# EUROPÄISCHE PATENTSCHRIFT

(11) **EP 1 430 094 B1**
(45) Veröffentlichungstag und Bekanntmachung des Hinweises auf die Patenterteilung: **08.12.2004**
(21) Anmeldenummer: 02791638.6
(22) Anmeldetag: 17.12.2002
(51) Int. Cl.: C08K 5/103, B32B 17/10, B32B 27/08, C08J 5/18

(54) **FOLIE FÜR VERBUNDSICHERHEITSSCHEIBEN MIT VERRINGERTER EIGENKLEBRIGKEIT**
FILM FOR COMPOSITE SECURITY DISKS WITH SELF-ADHESIVENESS
FEUILLE POUR VITRES DE SECURITE COMPOSITES A AUTO-ADHESIVITE REDUITE

(30) Priorität: 18.12.2001 DE 10162338
(43) Veröffentlichungstag der Anmeldung: 23.06.2004
(73) Patentinhaber: HT TROPLAST AG, 53840 Troisdorf (DE)
(72) Erfinder: HOSS, Manfred, 53844 Troisdorf (DE); KOLL, Bernhard, D-53757 Sankt Augustin (DE); STENZEL, Holger, 53773 Hennef (DE)
(74) Vertreter: HT-Patentabteilung
(86) Internationale Anmeldenummer: PCT/DE2002/004614
(87) Internationale Veröffentlichungsnummer: WO 2003/051974

(56) Entgegenhaltungen:
- EP-A- 0 133 848
- DE-A- 19 938 159

## Beschreibung

### Technisches Gebiet

Verbundsicherheitsscheiben, bestehend aus zwei Glasscheiben und einer die Glasscheiben verbindenden Klebefolie aus weichmacherhaltigen teilacetalisierten Polyvinylalkoholen, vorzugsweise aus Polyvinylbutyral (PVB), werden insbesondere als Windschutzscheiben in Kraftfahrzeugen eingesetzt, wobei gegebenenfalls eine Glasscheibe durch eine Kunststoffscheibe, vornehmlich aus einem amorphen Polyamid, transparentem PMMA, Polycarbonat oder Polyester, ersetzt sein kann. Auch auf dem Bausektor, z. B. als Fensterscheiben oder als Zwischenwände, werden solche Silikatglas/Silikatglas- bzw. Silikatglas/Kunststoff-Verbunde eingesetzt, wobei gegebenenfalls je nach ihrer Verwendung, z. B. als Verbundpanzergläser, auch Mehrfachverbunde, also Verbunde, die aus mehr als zwei tragenden Schichten bestehen, eingesetzt werden.

Während Verbundsicherheitsscheiben für den Baubereich i.a. eine möglichst hohe Haftung zwischen Glas und Klebefolie aufweisen sollen, wird für Verbundsicherheitsscheiben für Kraftfahrzeuge eine definierte, nicht zu hohe Haftung angestrebt. Verbundsicherheitsgläser bestehen im allgemeinen aus zwei Glasscheiben und einer die Glasscheiben verbindenden Klebefolie.

Die Klebefolien zur Herstellung von Verbundsicherheitsscheiben werden in der Regel extrudiert und nach der Formgebung in Breitschlitzwerkzeugen zu großen Rollen aufgewickelt. Die Klebefolien - nachfolgend auch verkürzt PVB-Folien genannt - weisen jedoch nicht nur eine gute Haftung gegenüber Glas, sondern auch gegenüber der benachbarten Wickellage der Rollen auf. Diese Blocking-Neigung genannte Eigenschaft erschwert die Handhabung der Folien insbesondere beim Auf- bzw. Abwickeln. Neben der Rollenware wird weichmacherhaltiges PVB auch als gestapelte Zuschnitt-Ware (sog. blanks) vertrieben, wobei die Blocking-Neigung ebenfalls unerwünscht ist.

Soweit in dieser Anmeldung der Begriff Polyvinylbutyral (PVB) verwendet wird, sollen damit gleichzeitig auch diejenigen Polymere eingeschlossen werden, die ähnliche Eigenschaften in Bezug auf ihre Verwendbarkeit haben wie (weichmacherhaltiges) Polyvinylbutyral. Hierzu gehören beispielsweise Ethylenvinylacetat oder bestimmte andere Ethylen-Copolymere. Als relevante Eigenschaften werden hier insbesondere die Klebrigkeit der Oberfläche, die Weichheit und die Gummielastizität bei Raumtemperatur angesehen.

### Stand der Technik

Aus der DE 17 04 568 A1 ist ein Verfahren zur Herstellung von weichmacherhaltigen, oberflächenmattierten Polyvinylbutyralfolien bekannt, bei dem man die bereits mit dem gewünschten Wassergehalt versehenen PVB-Folien zusammen mit einer als Trennschicht wirkenden Einlage aus einer gegebenenfalls mattierten Polyolefinfolie aufspult und die so erhaltenen Rollen luft- und feuchtigkeitsdicht verpackt. Der Einsatz dieser sogenannten Zwischenläuferfolie ist allerdings relativ umständlich.

Aus der DE 19 27 936 A1 ist ein Verfahren zur Herstellung von weichmacherhaltigen Polyvinylbutyralfolien geringerer Klebneigung bekannt, die nach dem Waschen Folien mit beidseitig aufgerauhten Oberflächen ergeben. Hierzu pudert man die Folien in noch warmem Zustand nach der Extrusion oder gegebenenfalls nach oberflächlicher Erwärmung mit gegenüber den Folien indifferenten, wasserlöslichen, nicht hygroskopischen, vorzugsweise kristallinen und farblosen Stoffen ein, die man durch Aufpressen in der Wärme auf den Folien verankert. Dieses Verfahren ist jedoch sehr aufwendig.

Weiterhin gibt es zahlreiche Erfindungen, die eine vorübergehende Verringerung der Klebrigkeit der weichmacherhaltigen Polyvinylbutyralfolien mittels spezieller Oberflächenprägungen oder anderweitiges Erzeugen besonderer Oberflächenstrukturen anstreben (z. B. EP 0 710 545 A1, EP 0 185 863 B1). In aller Regel reicht der hierdurch erzielte Effekt jedoch nicht aus, die Folienwickel bei üblichen Umgebungstemperaturen zu transportieren. Die Rollen aus PVB-Folien werden daher trotzt optimierter Oberflächengestaltung nahezu ausschließlich entweder mit Zwischenläuferfolien ausgeliefert oder als sogenannte Kühlfolie eingesetzt. Hierbei wird die Folie noch vor dem Aufwickeln auf eine Temperatur von 4 - 10 °C gekühlt. Die fertigen Folienwickel müssen ohne Unterbrechung der Kühlkette bis zur Weiterverarbeitung bei einer Temperatur von unter 10 °C transportiert werden.

Es sind auch bereits Ansätze bekannt geworden, die Blocking-Neigung von PVB-Folien durch Modifikation des PVB-Harzes, der Weichmacher oder durch Zusatz von die Klebrigkeit vermindernden Substanzen zu verringern (US 4,999,078 A1, EP 0 067 022 B2). Diese Verfahren haben jedoch in der Regel zum Nachteil, dass die Haftung der Folie gegenüber dem Glas bei der späteren Laminierung ebenfalls beeinflusst wird oder ihre Wirkung nicht ausreichend hoch ist, um eine aufwendige Kühlung vermeiden zu können. Ein weiterer Nachteil dieser Verfahren ist, dass modifizierte PVB-Harze und Weichmacher kommerziell nur sehr eingeschränkt verfügbar sind. Diese Alternativen konnten sich daher auf dem Markt bislang nicht durchsetzen.

### Aufgabe

Aufgabe der vorliegenden Erfindung ist es, eine als Zwischenschicht in Verbundsicherheitsgläsern geeignete weichmacherhaltige Folie auf der Basis von teilacetalisierten Polyvinylalkoholen sowie ein Verbundsicherheitsglas mit einer solchen Folie zur Verfügung zu stellen, die sich als Zwischenschicht in Verbundsicherheitsgläsern eignet und die oben beschriebenen Nachteile nicht aufweist.

### Darstellung der Erfindung

Kern der vorliegenden Erfindung ist die Verwendung bestimmter Pentaerythritester zur Verhinderung des Klebens der Folie auf sich selbst.

Überraschenderweise hat sich herausgestellt, dass sich bestimmte Pentaerythritester bereits in außerordentlich geringen Konzentrationen dazu eignen, in weichgemachten Polyvinylbutyralfolien die Eigenklebrigkeit erheblich zu vermindern, ohne dass es zu einer Beeinträchtigung der Haftung zum Glas nach dem Laminieren kommt. Auch alle anderen Folieneigenschaften wie beispielsweise die Folienmechanik oder die hohe Transparenz bleiben völlig unverändert.

Für die vorliegende Erfindung haben sich als Pentaerythritester insbesondere Pentaerythrit-tetra-stearate und Pentaerythrit-(mono, di, oder tri)-adipato-stearate, letztere insbesondere auch als Isomergemisch, als besonders geeignete Zusätze herausgestellt.

Die erfindungsgemäß eingesetzten Pentaerythritester sind Ester des Pentaerythrits, einem vierwertigen Alkohol, wobei eine oder mehrere der Alkoholgruppen durch ein- oder mehrwertige Carbonsäuren substituiert sind. Die zur Veresterung verwendeten Säuren sind bevorzugt längerkettige Säuren, insbesondere mit 12 bis 21 Kohlenstoffatomen. Bevorzugte Pentaerythritester sind in den Ansprüchen 2 bis 5 angegeben.

Die bevorzugten Pentaerythritester weisen bereits in Mengen ab 0,002 bis 0,005 Gew.-%, also 20 - 50 ppm, eine spürbare Antiblocking-Wirkung auf. Bevorzugt werden sie in Mengen von 0,01 bis 0,1 Gew.-%, jeweils bezogen auf die Masse der Folie, eingesetzt. Bei Einsatz von größeren Mengen als 1 Gew.-% besteht die Gefahr einer Trübung der Folie, so dass eine Verwendung von Folien mit höherem Gehalt an Pentaerythritester als Zwischenschicht in Verbundsicherheitsgläsern in der Regel vermieden werden sollte.

Es hat sich als besonders vorteilhaft erwiesen, den Zusatz an Pentaerythritestern zunächst im verwendeten Weichmacher zu dispergieren, oder, sofern diese darin löslich sind, zu lösen. Die Herstellung der Folien erfolgt danach in an sich bekannten Weise, z. B. durch Extrusion mittels eines Breitschlitzwerkzeuges gemäß der EP 0 185 863 B1. Bei der Extrusion werden die Pentaerythritester, sofern sie nicht löslich sind, im Extruder aufgeschmolzen und homogen in der Schmelze verteilt.

Als Weichmacher eignen sich zum einen alle nach dem Stand der Technik bekannten Weichmacher, insbesondere Ester von mehrwertigen Säuren, mehrwertigen Alkoholen oder Oligoetherglykolen, wie z. B. Adipinsäureester, Sebazinsäureester oder Phthalsäureester, insbesondere Di-n-hexyladipat, Dibutylsebazat, Dioctylphthalat, Ester von Di-, Tri- oder Tetraglykolen mit linearen oder verzweigten aliphatischen Carbonsäuren und Mischungen dieser Ester. Als Standardweichmacher werden bevorzugt Ester von aliphatischen Diolen mit langkettigen aliphatischen Carbonsäuren, insbesondere Ester von Triethylenglykol mit 6 bis 10 C-Atomen enthaltenden aliphatischen Carbonsäuren, wie 2-Ethylbuttersäure oder n-Heptansäure. Besonders bevorzugt sind ein oder mehrere Weichmacher aus der Gruppe bestehend aus Di-n-hexyladipat (DHA), Dibutylsebazat (DBS), Dioctylphthalat (DOP), Ester von Di-, Tri- oder Tetraglykolen mit linearen oder verzweigten aliphatischen Carbonsäuren, insbesondere Triethylenglykol-bis-2-ethylbutyrat (3GH), Triethylenglykol-bis-n-heptanoat (3G7), Triethylenglykol-bis-2-ethylhexanoat (3G8), Tetraethylenglykol-bis-n-heptanoat (4G7).

Die erfindungsgemäß eingesetzten Pentaerythritester ermöglichen aber auch den Einsatz von Spezialweichmachern, die z. B. eine verbesserte Schalldämmung der Folien bewirken, siehe auch die DE 199 38 159 A1, auf deren Inhalt hiermit vollinhaltlich bezug genommen wird. Hierzu zählt insbesondere die Gruppe von Weichmachern bestehend aus
- Polyalkylenglykolen der allgemeinen Formel
   HO-(R-O)ₙ-H mit R = Alkylen und n > 5,
- Blockcopolymeren aus Ethylen- und Propylenglykol der allgemeinen Formel HO-(CH₂-CH₂-O)ₙ-(CH₂-CH(CH₃)-O)ₘ-H mit n > 2, m > 3 und (n+m) < 25,
- Derivaten von Blockcopolymeren aus Ethylen- und Propylenglykol der allgemeinen Formel R₁O-(CH₂-CH₂-O)ₙ-(CH₂-CH(CH₃)-O)ₘ-H bzw. HO-(CH₂-CH₂-O)ₙ-(CH₂-CH(CH₃)-O)ₘ-R₁ mit n > 2, m > 3 und (n+m) < 25 und R₁ als organischem Rest,
- Derivate von Polyalkylenglykolen der allgemeinen Formel R₁-O-(R₂-O)ₙ-H mit R₂ = Alkylen und n ≥ 2, bei denen der Wasserstoff von einer der beiden terminalen Hydroxygruppen des Polyalkylenglykols durch einen organischen Rest R₁ ersetzt ist,
- Derivate von Polyalkylenglykolen der allgemeinen Formel R₁-O-(R₂-O)ₙ-R₃ mit R₂ = Alkylen und n > 5, bei denen der Wasserstoff bei der terminaler Hydroxygruppen des Polyalkylenglykols durch einen organischen Rest R₁ bzw. R₃ ersetzt ist.

Diese Spezialweichmacher werden bevorzugt in Kombination mit einem oder mehreren Standardweichmachern eingesetzt.

Diese Spezialweichmacher führen ohne den Einsatz der erfindungsgemäßen Pentaerythritester in der Regel zu Folien mit besonders hoher Blocking-Neigung, so dass deren Handhabung beim späteren Laminieren und insbesondere beim Aufwickeln und Abwickeln besonders problematisch ist. Die erfindungsgemäß eingesetzten Pentaerythritester bewirken in synergistischer Weise eine Herabsetzung der Blocking-Eigenschaften dieser von Natur aus besonders zum Blocken neigenden Folien auf Basis von teilacetalisierten Polyvinylalkoholen, so dass sich deren Einsatz für Folien mit dieses Weichmachern besonders empfiehlt.

Das plastifizierte teilacetalisierte Polyvinylalkohol-Harz enthält vorzugsweise 25 bis 45 Gewichtsteile und besonders bevorzugt 30 bis 40 Gewichtsteile Weichmacher, bezogen auf 100 Gewichtsteile Harz. Es ist bekannt, dass höhere Gehalte von Weichmachern zu erhöhter Eigenklebrigkeit der Folien führen. Der Einsatz der erfindungsgemäß eingesetzten Pentaerythritester ermöglicht jedoch auch den Einsatz höherer Mengen an Weichmacher, die ohne diesen Zusatz nicht mehr verarbeitbar wären.

Die teilacetalisierten Polyvinylakohole werden in bekannter Weise durch Acetalisierung von hydrolysierten Polyvinylestern hergestellt. Als Aldehyde können beispielsweise Formaldehyd, Acetaldehyd, Propionaldehyd, Butyraldehyd u. dgl., bevorzugt Butyraldehyd, verwendet werden. Das bevorzugte Polyvinylbutyral-Harz enthält 10 bis 25 Gew.-%, vorzugsweise 17 bis 23 Gew.-% und besonders bevorzugt 19 bis 21 Gew.-% Vinylalkoholreste. Das Polyvinylbutyral enthält ggf. zusätzlich 0 bis 20 Gew.-%, bevorzugt 0,5 bis 2,5 Gew.-% Acetatreste.

Der Wassergehalt der Folien wird bevorzugt auf 0,15 bis 0,8 Gew.-%, insbesondere auf 0,2 bis 0,5 Gew.-% eingestellt.

Ein wesentlicher Vorteil der erfindungsgemäß eingesetzten Pentaerythritester liegt darin, dass einerseits die Eigenhaftung der als Zwischenschicht in Verbundsicherheitsgläsern geeigneten weichmacherhaltigen Folie auf der Basis von teilacetalisierten Polyvinylalkoholen erheblich reduziert wird, andererseits aber die Haftung der Folie gegenüber Glas nicht beeinträchtigt wird.

Zur Quantifizierung der Eigenhaftung (Blockingkraft) ist aus der EP 0 067 022 B2 ein sogenannter T-peel-strength-Test bekannt: Hierbei werden zwei 3 cm x 10 cm große Streifen der zu testenden Folie unter einer Last von 60 N bei einer Temperatur von 20 °C für 48 h aufeinandergelegt. Anschließend werden die Streifen mit definierter Geschwindigkeit von 500 mm/min unter einen Winkel von 2 x 90 ° unter Messung der Abzugskraft auseinandergezogen. Im übrigen wird hiermit auf die Beschreibung des T-peel-strength-Tests in der EP 0 067 022 B2 verwiesen.

Dieser T-peel-strength-Test eignet sich gut dazu, die für die Wirksamkeit der erfindungsgemäß eingesetzten Pentaerythritester benötigten Mindestmengen zu ermitteln. Bevorzugt wird der Pentaerythritester in solcher Konzentration eingesetzt, die eine Verringerung der Abzugskraft um mindestens 20 %, bevorzugt um mindestens 50 % und besonders bevorzugt um mindestens 90 % bewirkt.

Zur Beurteilung der Haftung einer PVB-Folie am Mineralglas wird ein sogenannter Kompressionsschertest gemäß der DE 197 56 274 A1 durchgeführt. Zur Herstellung der Prüfkörper wird die zu prüfende PVB-Klebefolie zwischen zwei ebene Silikatglasscheiben des Formats 300 mm x 300 mm mit einer Dicke von 4 mm gebracht, in einem Vorverbundofen mit Kalanderwalzen zu einem Glas-Vorverbund entlüftet und anschließend in einem Autoklav bei einem Druck von 12 bar und bei einer Temperatur von 140 °C innerhalb von 30 min. zu einem ebenen Verbundsicherheitsglas verpresst. Aus dem so hergestellten Verbundsicherheitsglas wer> den 10 Proben mit den Maßen 25,4 mm x 25,4 mm geschnitten. Diese werden unter einem Winkel von 45° in eine zweiteilige, in Fig. 1 der DE 197 56 274 A1 symbolisch dargestellte Prüfapparatur eingespannt. Die obere Hälfte wird mit einer stetig steigenden, genau vertikal nach unten gerichteten Kraft beaufschlagt, bis es zu einer Abscherung innerhalb des Prüfkörpers, d. h. der zu prüfenden Verbundsicherheitsglasscheiben, kommt.
Die Prüfparameter sind wie folgt:

**Tabelle 1:**

| | |
|---|---|
| Prüfkörper: | quadratisch 25,4 mm x 25,4 mm |
| Verlegung: | untere Scheibe jeweils mit der Luft-bzw. Feuerseite zur Folie (Luft/Luft), oder obere und untere Scheibe jeweils mit der Zinnseite zur Folie (Bad/Bad) |
| Lagerung vor dem Versuch: | 4h bei Normklima 23°C/50% RLF |
| Vorschub: | 2,5 mm/min |
| Probenanzahl: | 10 |
| Auswertung: | Maximalkraft, die zur Abscherung der Folie vom Glas benötigt wird. Die Kraft wird auf die Probenfläche bezogen (in N/mm² oder psi) |

Für jedes Beispiel wird die bei der Abscherung ausgeübte Kraft von zehn gleichen Prüfkörpern linear gemittelt. Soweit in den nachfolgenden Beispielen und den Ansprüchen auf den mittleren Kompressionsschertest-Wert Bezug genommen wird, ist damit dieser Mittelwert aus 10 Messungen gemeint. Im übrigen wird auf die DE 197 56 274 A1 verwiesen.

### Wege zur Ausführung der Erfindung und Vergleichsbeispiele

### Vergleichsbeispiel 1 und Beispiel 2 bis 4

Zu 74 Gewichtsteilen eines Polyvinylbutyral-Harzes mit einem Vinylalkohol-Restgehalt von 20,5 Gew.-% und einem Vinylacetat-Restgehalt von 0,8 Gew.-% wurden 26 Gewichtsteile von Triethylenglycol-bis-2-heptanoat (3G7) als Weichmacher zusammen mit 0,15 Gewichtsteilen des UV-Absorbers Tinuvin® P (Hersteller: Fa. Ciba) gegeben. Die in der nachfolgenden Tabelle angegebenen Mengen an Pentaerythrit-tetra-stearat, Fabrikat Glycolube® P der Firma Lonza, wurden zuvor in dem Weichmacher dispergiert. Die Mischung wurde in einem Doppelschnecken-Extruder mit Breitschlitzdüse bei ca. 200°C Massetemperatur zu einem transparenten Film der Dicke 0,38 mm mit aufgerauhter Oberfläche, R_{z} = 18 µm, extrudiert. Der Feuchtegehalt der Folien betrug bei allen Proben jeweils ca. 0,45 Gew.-%

**Tabelle 2**

| **Formulierung** | **Vergleichsbeispiel 1** | **Beispiel 2** | **Beispiel 3** | **Beispiel 4** |
|---|---|---|---|---|
| Polyvinylbutyral-Harz [Gew.-Tle] | 74,0 | 74,0 | 74,0 | 74,0 |
| Weichmacher 3G7 [Gew.-Tle] | 26,0 | 26,0 | 26,0 | 26,0 |
| UV-Absorber [Gew.-Tle] | 0,15 | 0,15 | 0,15 | 0,15 |
| Pentaerythrit-tetra-stearat [Gew.-%] | 0 | 0,001 % | 0,0025 % | 0,005% |
| | | | | |
| Kompressionsschertest Luft/Luft [N/mm²] | 27,7 | 28,1 | 30,1 | 29,7 |
| Zinn/Zinn [N/mm²] | 17,5 | 18,3 | 17,9 | 17,4 |
| | | | | |
| Blockingkraft (nach EP 0 067 022 B2) [N/30 mm] | 25 | 24 | 17 | 8 |

Man erkennt, dass der Zusatz von ca. 0,0025 Gew.-% = 25 ppm Pentaerythrit-tetra-stearat als Pentaerythritester bereits eine signifikante Verringerung der Blockingkraft bewirkt, während die Glashaftung (Kompressionsschertest) im Rahmen der Messgenauigkeit unverändert bleibt. Bei einem Zusatz von 0,005 Gew.-% = 50 ppm Pentaerythrit-tetra-stearat ergibt sich bereits eine Ansenkung der Blockingkraft um fast 70 % auf 8 [N/30 mm].

### Vergleichsbeispiel 5, Beispiele 6 bis 9

Es wurde in der gleichen Weise verfahren wie im Beispiel 1 beschrieben, jedoch mit größeren Abstufungen an Pentaerythrit-tetra-stearat (Glycolube® P )gemäß nachfolgender Tabelle 3. Als Polyvinylbutyral-Harz wurde ein Typ mit einem Vinylalkohol-Restgehalt von 20,5 Gew.-% und einem Vinylacetat-Restgehalt von 0,8 Gew.-% eingesetzt. Der Einsatz von nur 0,01 Gew.-% an Pentaerythritester vom Typ Pentaerythrit-tetra-stearat führte zu einer Verringerung der Blockingkraft auf 1,2 [N/30 mm], also eine Verringerung um ca. 95 %. Eine Erhöhung des Pentaerythrittetra-stearat-Anteils auf 0,02 % = 200 ppm führte zu einer weiteren Absenkung der Blockingkraft auf weniger als 1,5 % des Ursprungswertes, während eine weitere Erhöhung des Pentaerythrittetra-steärat-Anteils nur noch geringe Verringerungen der Blockingkraft zu Folge hat.

**Tabelle 3**

| **Formulierung** | **Vergleich 5** | **Beispiel 6** | **Beispiel 7** | **Beispiel 8** | **Beispiel 9** |
|---|---|---|---|---|---|
| Polyvinylbutyral-Harz [Gew.-Tle] | 74,0 | 74,0 | 74,0 | 74,0 | 74,0 |
| Weichmacher 3G7 [Gew.-Tle] | 26,0 | 26,0 | 26,0 | 26,0 | 26,0 |
| UV-Absorber [Gew.-Tle] | 0,15 | 0,15 | 0,15 | 0,15 | 0,15 |
| Pentaerythrit-tetra-stearat [Gew.-%] | 0 | 0,01 % | 0,02 % | 0,03 % | 0,04 % |
| | | | | | |
| Kompressionsschertest Luft/Luft [N/mm²] | 27,7 | 28,7 | 27,4 | 24,5 | 22,5 |
| Zinn/Zinn [N/mm²] | 17,5 | 19,1 | 19,3 | 17,7 | 15,2 |
| | | | | | |
| Blockingkraft (nach EP 0 067 022 B2) [N/30 mm] | 25 | 1,2 | 0,30 | 0,22 | 0,20 |

Die Wirkung dieser Mengen an Pentaerythrit-tetra-stearat ist so hervorragend, dass auf eine Kühlung der Folien bis zu Temperaturen von ca. 30 bis 40 °C völlig verzichtet werden kann. Dieses führt zu enormen Einsparungen bei der Herstellung, beim Transport und der Verwendung der erfindungsgemäßen Folien.

### (Vergleichs-)Beispiele 10 bis 12

Es wurde in der gleichen Weise verfahren wie im Beispiel 1 beschrieben, jedoch mit einem Pentaerythrit-adipato-stearat, Typ Advalube® E-2100 der Firma Rohm & Haas, gemäß nachfolgender Tabelle 4. Advalube® E-2100 ist eine Isomerengemisch aus Pentaerythrit-mono-adipato-stearat, Pentaerythrit-di-adipato-stearat und Pentaerythrit-tri-adipato-stearat, also einem Gemisch von ein- bis dreifach substituiertem Pentaerythrit. Der Einsatz von nur 0,04 Gew.-% an Pentaerythritester dieses Typs führte zu einer Verringerung der Blockingkraft auf 1,0 [N/30 mm], also eine Verringerung um ca. 95 %. Eine Erhöhung des Pentaerythrit-(mono, di, tri)-adipato-stearat-Anteils auf 0,1 % = 1000 ppm führte zu einer weiteren Absenkung der Blockingkraft auf weniger als 1 % des Ursprungswertes.

**Tabelle 4**

| **Formulierung** | **Vergleichsbeispiel** 10 | **Beispiel 11** | **Beispiel 12** |
|---|---|---|---|
| Polyvinylbutyral-Harz [Gew.-Tle] | 74,0 | 74,0 | 74,0 |
| Weichmacher 3G7 [Gew.-Tle] | 26,0 | 26,0 | 26,0 |
| UV-Absorber [Gew.-Tle] | 0,15 | 0,15 | 0,15 |
| Pentaerythrit-adipato-stearat (Isomerengemisch)[Gew.-%] | 0 | 0,04 % | 0,10 % |
| | | | |
| Kompressionsschertest Luft/Luft [N/mm²] | 27,7 | 24,1 | 23,9 |
| Zinn/Zinn [N/mm²] | 17,5 | 16,1 | 14,9 |
| | | | |
| Blockingkraft (nach EP 0 067 022 B2) [N/30 mm] | 25 | 1,0 | 0,2 |

### Vergleichsbeispiel 13, Beispiel 14

Es wurde in der gleichen Weise verfahren wie im Beispiel 1 beschrieben, jedoch mit einer erhöhten Menge einer Mischung aus Di-n-hexyladipat (DHA) und Marlophen® NP 6 der Firma Condea, einem beidseitig substituierten PEG mit einem Polyethylenglykol-Anteil mit einem DP von 6 und einem Isononylphenol-Anteil an einem der beiden Hydroxyl-terminierten Enden, als Weichmacher. Diese Folienrezeptur führt zu Folien mit stark verbesserten Akustikeigenschaften, wie in der DE 199 38 159 A1 beschrieben. Ohne den erfindungsgemäßen Zusatz von Pentaerythrit-tetra-stearat ergibt sich eine - absolut gesehen - geringe Blockingkraft von 11 [N/30 mm]. Da die Folie aufgrund der eingesetzten Weichmachermenge und -rezeptur jedoch wesentlich weicher ist als eine Standardfolie, erschwert diese Eigenhaftung bereits eine Handhabung der Folie in hohem Maße. Der Zusatz von 0,04 Gew.-% Pentaerythrit-tetra-stearat senkt diesen Wert auf 0,12 [N/30 mm] oder etwa 1 % des Ausgangswertes, was die Handhabbarkeit der Folie wesentlich verbessert.

**Tabelle 6**

| **Formulierung** | **Vergleichsbeispiel 13** | **Beispiel 14** |
|---|---|---|
| Polyvinylbutyral-Harz [Gew.-Tle] | 66,0 | 66,0 |
| Weichmacher DHA [Gew.-Tle] | 22,0 | 22,0 |
| Weichmacher NP 6 [Gew.-Tle] | 12,0 | 12,0 |
| UV-Absorber [Gew.-Tle] | 0,15 | 0,15 |
| Pentaerythrit-tetra-stearat [Gew.-%] | 0 | 0,04 % |
| | | |
| Kompressionsschertest Luft/Luft [N/mm²] | 20,5 | 20,5 |
| Zinn/Zinn [N/mm²] | 10,5 | 11,5 |
| | | |
| Blockingkraft (nach EP 0 067 022 B2) [N/30 mm] | 10,9 | 0,12 |

## Patentansprüche

1. Als Zwischenschicht in Verbundsicherheitsgläsern geeignete weichmacherhaltige Folie auf der Basis von teilacetalisierten Polyvinylalkoholen, **gekennzeichnet durch** einen Zusatz eines oder mehrerer Pentaerythritester der allgemeinen Zusammensetzung: 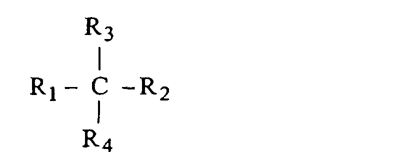 mit R₁, R₂, R₃ = 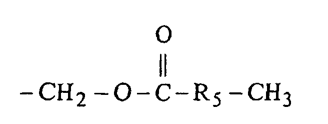 oder 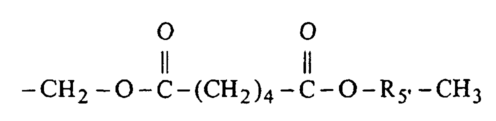 oder
-CH₂-O-R₇
mit R₅, R_{5'} = gesättigter oder ungesättigter Kohlenwasserstoff mit 1 bis 26 C-Atomen, und R₇ = H, Alkyl- oder Arylgruppe,
und R₄ = 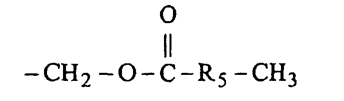 oder 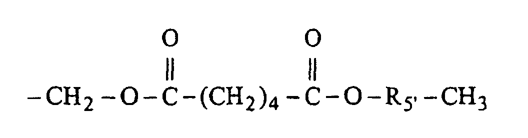 mit R₅, R_{5'} = gesättigter oder ungesättigter Kohlenwasserstoff mit 1 bis 26 C-Atomen.

2. Weichmacherhaltige Folie nach Anspruch 1, **gekennzeichnet durch** einen Zusatz eines oder mehrerer Pentaerythritester der allgemeinen Zusammensetzung: 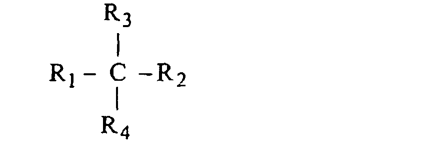 mit R₁, R₂, R₃ = 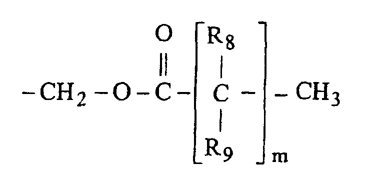 oder 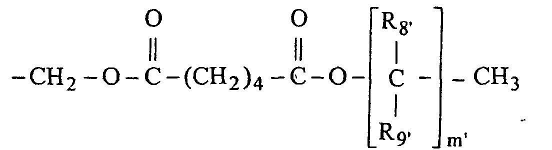 oder
-CH₂-O-R₇
jeweils mit R₇, R₈, R_{8'}, R₉, R_{9'} = H, Alkyl- oder Arylgruppe und m, m' = 1 - 26
und R₄ = 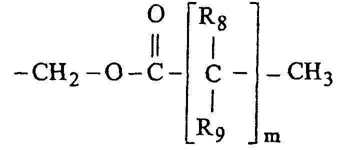 oder 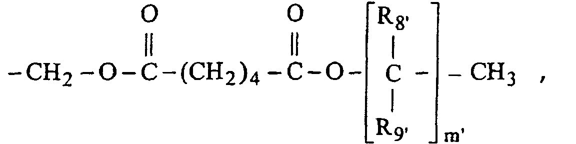 jeweils mit R₈, R_{8'}, R₉, R_{9'} = H, Alkyl- oder Arylgruppe und m, m' = 1 - 26.

3. Weichmacherhaltige Folie nach Anspruch 2, **dadurch gekennzeichnet, dass** als Pentaerythritester Ester gemäß der Formel 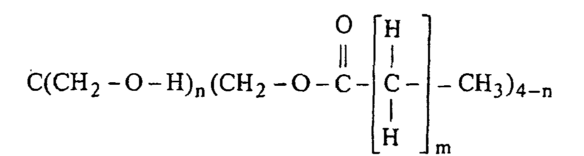 mit n = 0 bis 2
und m = 11 bis 20
oder 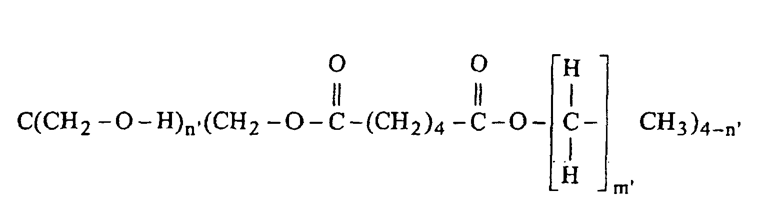 mit n' = 1 bis 3
m' = 11 bis 20
verwendet werden.

4. Weichmacherhaltige Folie nach Anspruch 3, **dadurch gekennzeichnet, dass** als Pentaerythritester ein Pentaerythrit-tetra-stearat eingesetzt wird.

5. Weichmacherhaltige Folie nach Anspruch 4, **dadurch gekennzeichnet, dass** als Pentaerythritester ein Pentaerythrit-(mono, di oder tri)adipato-stearat gemäß der Formel: 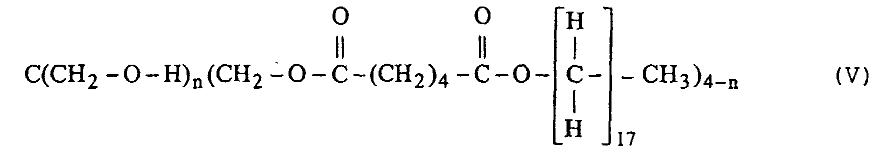 mit n = 1, 2 oder 3
eingesetzt wird.

6. Weichmacherhaltige Folie nach einem der Ansprüche 1 bis 5, **dadurch gekennzeichnet, dass** ein oder mehrere Pentaerythritester in einer Menge von insgesamt mehr als 0,002 Gew.-%, insbesondere 0,01 bis 0,1 Gew.-%, bezogen auf den Gesamtansatz der Folie, eingesetzt werden.

7. Weichmacherhaltige Folie nach einem der Ansprüche 1 bis 6, **dadurch gekennzeichnet, dass** der oder die Pentaerythritester homogen in der Folie gelöst oder dispergiert sind.

8. Weichmacherhaltige Folie nach einem der Ansprüche 1 bis 7, enthaltend ein oder mehrere Weichmacher aus der Gruppe bestehend aus
• Adipinsäureestern,
• Sebazinsäureestern,,
• Phthalsäureestern,
• Ester von Di-, Tri- oder Tetraglykolen mit linearen oder verzweigten aliphatischen Carbonsäuren, insbesondere Triethylenglykol-bis-2-ethylbutyrat (3GH), Triethylenglykol-bis-n-heptanoat (3G7), Triethylenglykol-bis-2-ethylhexanoat (3G8), Tetraethylenglykol-bis-n-heptanoat (4G7).

9. Weichmacherhaltige Folie nach einem der Ansprüche 1 bis 8, enthaltend einen oder mehrere Weichmacher aus der Gruppe bestehend aus
• Polyalkylenglykolen der allgemeinen Formel
• HO-(R-O)ₙ-H mit R = Alkylen und n > 5,
• Blockcopolymeren aus Ethylen- und Propylenglykol der allgemeinen Formel HO-(CH₂-CH₂-O)ₙ-(CH₂-CH(CH₃)-O)ₘ-H mit n > 2, m > 3 und (n+m) < 25,
• Derivaten von Blockcopolymeren aus Ethylen- und Propylenglykol der allgemeinen Formel R₁O-(CH₂-CH₂-O)ₙ-(CH₂-CH(CH₃)-O)ₘ-H bzw. HO-(CH₂-CH₂-O)ₙ-(CH₂-CH(CH₃)-O)ₘ-R₁ mit n > 2, m > 3 und (n+m) < 25 und R₁ als organischem Rest,
• Derivate von Polyalkylenglykolen der allgemeinen Formel R₁-O-(R₂-O)ₙ-H mit R₂ = Alkylen und n ≥ 2, bei denen der Wasserstoff von einer der beiden terminalen Hydroxygruppen des Polyalkylenglykols durch einen organischen Rest R₁ ersetzt ist,
• Derivate von Polyalkylenglykolen der allgemeinen Formel R₁-O-(R₂-O)ₙ-R₃ mit R₂ = Alkylen und n > 5, bei denen der Wasserstoff bei der terminaler Hydroxygruppen des Polyalkylenglykols durch einen organischen Rest R₁ bzw. R₃ ersetzt ist.

10. Verwendung eines oder mehrerer Ester aus der Gruppe bestehend aus
- Pentaerythritester der allgemeinen Zusammensetzung: 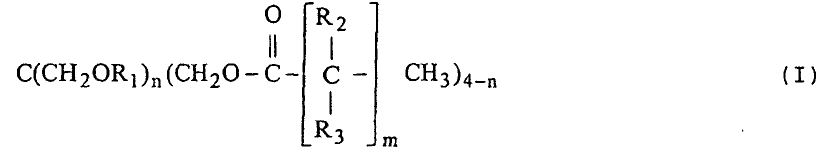 mit
R₁ = H, Alkyl- oder Arylgruppe
R₂ = H, Alkyl- oder Arylgruppe
R₃ = H, Alkyl- oder Arylgruppe
n = 0 - 3
m = 1 - 26
- Pentaerythrit-adipato-carboxylat-ester der allgemeinen Zusammensetzung: 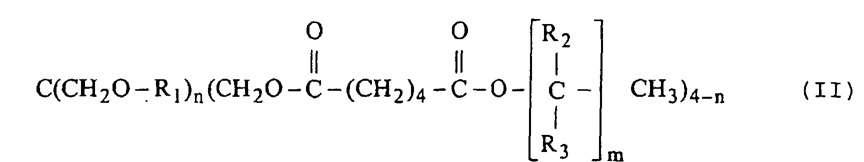 mit
R₁ = H, Alkyl- oder Arylgruppe
R₂ = H, Alkyl- oder Arylgruppe
R₃ = H, Alkyl- oder Arylgruppe
n = 0 - 3
m = 1 - 26.
als ein die Eigenklebrigkeit herabsetzender Zusatz in extrudierten Folien auf der Basis von teilacetalisierten Polyvinylalkoholen für die Herstellung von Verbundsicherheitsglas.

11. Verwendung nach Anspruch 10, **dadurch gekennzeichnet, dass** der bzw. die Pentaerythritester in einer solchen Konzentration eingesetzt werden, die eine Verringerung der Eigenhaftung (Blockingkraft), gemessen als Abzugskraft im T-peel-strength-Test gemäß der EP 0 067 022 82, von wenigstens 50 % ergibt.

12. Verbundsicherheitsglas mit wenigstens einer Glasscheibe und einer an diese Glasscheibe angrenzenden Folie auf der Basis von teilacetalisierten Polyvinylalkoholen nach einem der Ansprüche 1 bis 9.

13. Transport und/oder Lagerung einer ohne Zwischenlage direkt zu einem Rollenwickel gewickelten Folie nach einem der Ansprüche 1 bis 9, **dadurch gekennzeichnet, daß** der Rollenwickel zumindest zeitweilig auf eine Temperatur von mindestens 20 °C erwärmt wird.

## Claims

1. A plasticized film suitable as an intermediate layer in laminated safety glass and based on partially acetalized polyvinyl alcohols, **characterized by** an addition of one or more pentaerythritol esters of the general constitution: 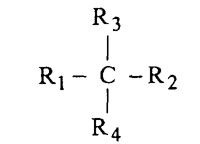 where R₁, R₂, and R₃ = 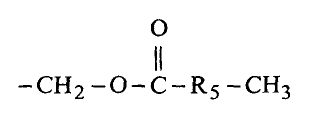 or 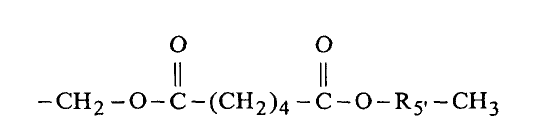 or
- CH₂-O-R₇
where R₅ and R_{5'} = saturated or unsaturated hydrocarbon having from 1 to 26 carbon atoms, and R₇ = H, alkyl group or aryl group,
and R₄ = 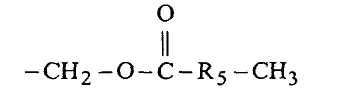 or 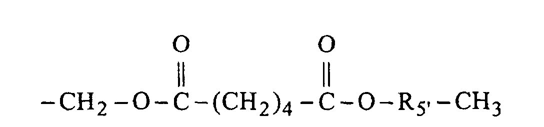 where R₅ and R_{5'} = saturated or unsaturated hydrocarbon having from 1 to 26 carbon atoms.

2. The plasticized film as claimed in claim 1, **characterized by** an addition of one or more pentaerythritol esters of the general constitution: 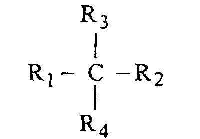 where R₁, R₂, R₃ = 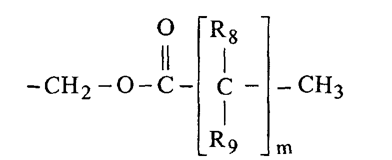 or 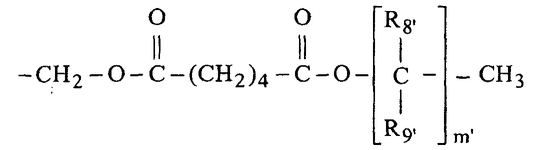 or
-CH₂-O-R₇
where in each case R₇, R₈, R_{8'}, R₉ and R_{9'} = H, alkyl group or aryl group, and m and m' = from 1 - 26
and R₄ = 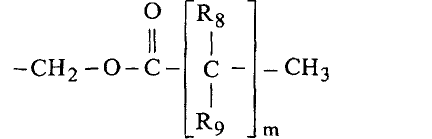 or 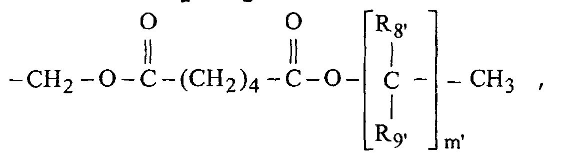 where in each case R₈, R_{8'}, R₉ and R_{9'} = H, alkyl group or aryl group, and m and m' = from 1 - 26.

3. The plasticized film as claimed in claim 2, **characterized in that** the pentaerythritol esters used comprise esters of the formula 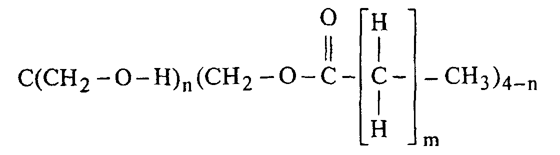 where n = from 0 to 2
and m = from 11 to 20 or 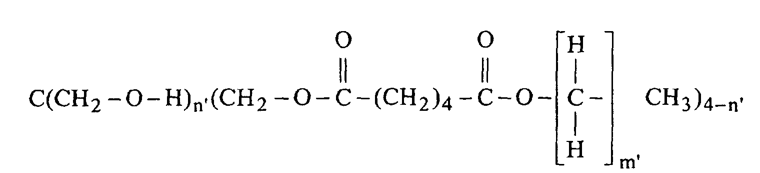 where n' = from 1 to 3
m' = from 11 to 20.

4. The plasticized film as claimed in claim 3, **characterized in that** the pentaerythritol esters used comprise a pentaerythritol tetrastearate.

5. The plasticized film as claimed in claim 4, **characterized in that** the pentaerythritol esters used comprise a pentaerythritol (mono, di- or tri-)adipatostearate of the formula: 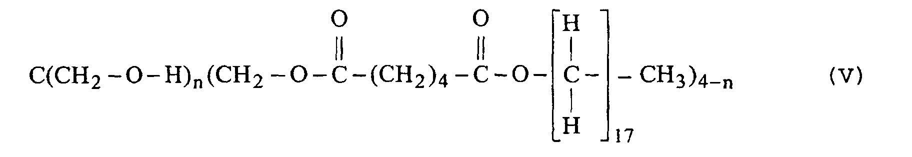 where n = 1, 2 or 3.

6. The plasticized film as claimed in any of claims 1 to 5, **characterized in that** use is made of one or more pentaerythritol esters, the total amount being more than 0.002% by weight, in particular from 0.01 to 0.1% by weight, based on the total mixture for the film.

7. The plasticized film as claimed in any of claims 1 to 6, **characterized in that** the pentaerythritol ester(s) has/have been dispersed or dissolved homogeneously in the film.

8. The plasticized film as claimed in any of claims 1 to 7, comprising one or more plasticizers from the group consisting of
• adipic esters,
• sebacic esters,
• phthalic esters,
• esters of di-, tri- or tetraglycols with linear or branched aliphatic carboxylic acids, in particular triethylene glycol bis(2-ethylbutyrate) (3GH), triethylene glycol bis(n-heptanoate) (3G7), triethylene glycol bis(2-ethylhexanoate) (3G8), tetraethylene glycol bis(n-heptanoate) (4G7).

9. The plasticized film as claimed in any of claims 1 to 8, comprising one or more plasticizers from the group consisting of
• polyalkylene glycols of the general formula HO-(R-O)ₙ-H,
where R = alkylene and n > 5,
• block copolymers composed of ethylene glycol and propylene glycol and having the general formula HO-(CH₂-CH₂-O)ₙ-(CH₂-CH(CH₃)-O)ₘ-H, where n > 2, m > 3 and (n+m) < 25,
• derivatives of block copolymers composed of ethylene glycol and propylene glycol and having the general formula R₁O-(CH₂-CH₂-O)ₙ-(CH₂-CH(CH₃)-O)ₘ-H, or HO-(CH₂-CH₂-O)ₙ-(CH₂-CH(CH₃)-O)ₘ-R₁, where n > 2, m > 3 and (n+m) < 25, and R₁ is an organic radical,
• derivatives of polyalkylene glycols of the general formula R₁-O-(R₂-O)ₙ-H, where R₂ = alkylene and n ≥ 2, where the hydrogen of one of the two terminal hydroxy groups of the polyalkylene glycol has been replaced by an organic radical R₁,
• derivatives of polyalkylene glycols of the general formula R₁-O-(R₂-O)ₙ-R₃, where R₂ = alkylene and n > 5, where the hydrogen in the terminal hydroxy groups of the polyalkylene glycol has been replaced by an organic radical R₁ and, respectively, R₃.

10. The use of one or more esters from the group consisting of
- pentaerythritol esters of the general constitution: 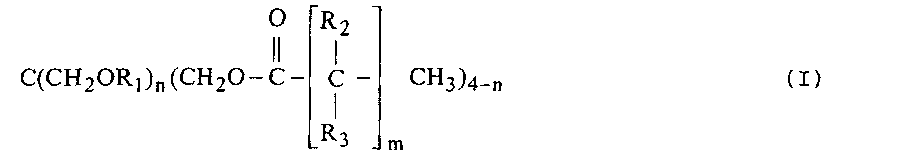 where R₁ = H, alkyl group or aryl group
R₂ = H, alkyl group or aryl group
R₃ = H, alkyl group or aryl group
n = from 0 - 3
m = from 1 - 26
- pentaerythritol adipatocarboxylate esters of the general constitution: 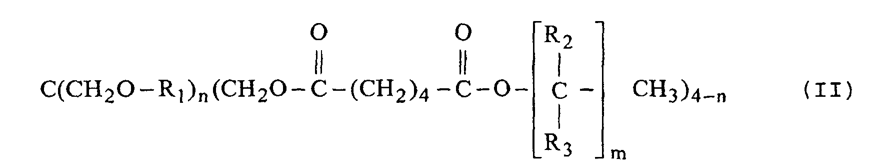 where R₁ = H, alkyl group or aryl group
R₂ = H, alkyl group or aryl group
R₃ = H, alkyl group or aryl group
n = from 0 - 3
m = from 1 - 26
as an additive which reduces self-adhesion in extruded films based on partially acetalized polyvinyl alcohols for the production of laminated safety glass.

11. The use as claimed in claim 10, **characterized in that** the concentration used of the pentaerythritol ester (s) is such as to give a reduction in self-adhesion (blocking force) of at least 50%, measured as peel force in the T-peel strength test of EP 0 067 022 B2.

12. A laminated safety glass with at least one glass pane and one film adjoining this glass pane and based on partially acetalized polyvinyl alcohols as claimed in any of claims 1 to 9.

13. A method for transport and/or storage of a film as claimed in any of claims 1 to 9, wound directly without interlay to give a wound roll, **characterized in that** the wound roll undergoes a rise in temperature to at least 20°C, at least for a period.

## Revendications

1. Feuille plastifiée, apte à servir de feuille intercalaire dans du verre composite de sécurité, à base de poly(alcool vinylique) partiellement acétalisé, **caractérisée en ce que** l'on y a ajouté un ou plusieurs esters de pentaérythritol de formule générale suivante : 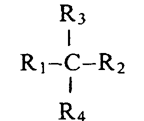 dans laquelle R₁, R₂ et R₃ représentent 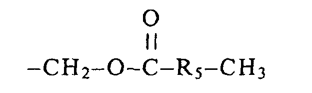 ou 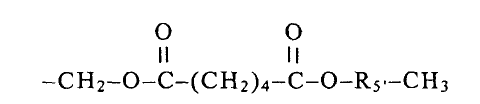 ou
-CH₂-O-R₇
où R₅ et R_{5'} représentent chacun un groupe hydrocarboné, saturé ou insaturé, comportant 1 à 26 atomes de carbone, et R₇ représente un atome d'hydrogène ou un groupe alkyle ou aryle,
et R₄ représente 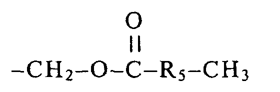 ou 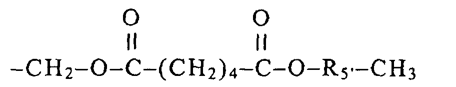 où R₅ et R_{5'} représentent chacun un groupe hydrocarboné, saturé ou insaturé, comportant 1 à 26 atomes de carbone.

2. Feuille plastifiée, conforme à la revendication 1, **caractérisée en ce que** l'on y a ajouté un ou plusieurs esters de pentaérythritol de formule générale suivante : 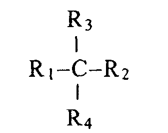 dans laquelle R₁, R₂ et R₃ représentent 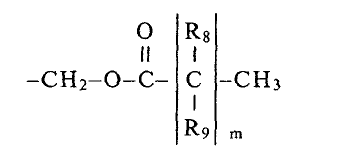 ou 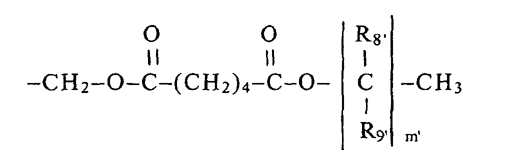 ou
- CH₂-O-R₇
où R₇, R₈, R_{8'}, R₉ et R_{9'} représentent chacun un atome d'hydrogène ou un groupe alkyle ou aryle, et m et m' valent de 1 à 26,
et R₄ représente 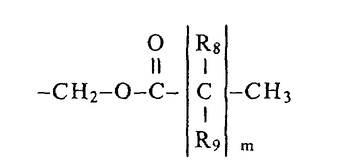 ou 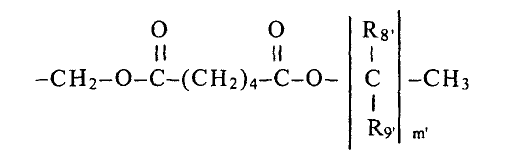 où R₈, R_{8'}, R₉ et R_{9'} représentent chacun un atome d'hydrogène ou un groupe alkyle ou aryle, et m et m' valent de 1 à 26.

3. Feuille plastifiée, conforme à la revendication 2, **caractérisée en ce que** l'on y emploie, comme ester de pentaérythritol, un ester de formule :
(HOCH₂)ₙC(CH₂-O-CO-(CH₂)ₘ-CH₃)₄₋ₙ
où n vaut de 0 à 2 et m vaut de 11 à 20,
ou de formule :
(HOCH₂)_{n'}C(CH₂-O-CO-(CH₂)₄-CO-O-(CH₂)_{m'}-CH₃)_{4-n'}
où n' vaut de 1 à 3 et m' vaut de 11 à 20.

4. Feuille plastifiée, conforme à la revendication 3, **caractérisée en ce que** l'on y emploie, comme ester de pentaérythritol, du tétrastéarate de pentaérythritol.

5. Feuille plastifiée, conforme à la revendication 3, **caractérisée en ce que** l'on y emploie, comme ester de pentaérythritol, un (mono, di ou tri)-adipate de pentaérythritol et de stéaryle, de formule
(HOCH₂)ₙC(CH₂-O-CO-(CH₂)₄-CO-O-(CH₂)₁₇-CH₃)₄₋ₙ (V)
où n vaut 1, 2 ou 3.

6. Feuille plastifiée, conforme à l'une des revendications 1 à 5, **caractérisée en ce que** l'on y emploie un ou plusieurs esters de pentaérythritol, en une quantité qui représente en tout plus de 0,002 %, et en particulier de 0,01 à 0,1 %, du poids total de la feuille.

7. Feuille plastifiée, conforme à l'une des revendications 1 à 6, **caractérisée en ce que** le ou les esters de pentaérythritol se trouvent en solution ou en dispersion homogène au sein de la feuille.

8. Feuille plastifiée, conforme à l'une des revendications 1 à 7, qui contient un ou plusieurs plastifiants choisis dans l'ensemble formé par les suivants :
- esters d'acide adipique,
- esters d'acide sébacique,
- esters d'acide phtalique,
- esters de diglycols, triglycols ou tétraglycols et d'acides carboxyliques aliphatiques linéaires ou ramifiés, en particulier bis(2-éthyl-butyrate) de triéthylèneglycol (3GH), bis(n-heptanoate) de triéthylèneglycol (3G7), bis(2-éthyl-hexanoate) de triéthylèneglycol (3G8) et bis(n-heptanoate) de tétraéthylèneglycol (4G7).

9. Feuille plastifiée, conforme à l'une des revendications 1 à 8, qui contient un ou plusieurs plastifiants choisis dans l'ensemble formé par les suivants :
- polyalkylèneglycols de formule générale :
HO-(R-O)ₙ-H
où R représente un groupe alkylène et n est supérieur à 5 ;
- copolymères à blocs d'éthylèneglycol et de propylèneglycol, de formule générale :
HO-(CH₂-CH₂-O)ₙ-(CH₂-CH(CH₃)-O)ₘ-H
où n est supérieur à 2, m est supérieur à 3, et (n+m) est inférieur à 25 ;
- dérivés de copolymères à blocs d'éthylèneglycol et de propylèneglycol, de formule générale :
R₁O-(CH₂-CH₂-O)ₙ-(CH₂-CH(CH₃)-O)ₘ-H
ou
HO-(CH₂-CH₂-O)ₙ-(CH₂-CH(CH₃)-O)ₘ-R₁
où n est supérieur à 2, m est supérieur à 3, (n+m) est inférieur à 25, et
R₁ représente un groupe organique ;
- dérivés de polyalkylèneglycols de formule générale :
R₁-O-(R₂-O)ₙ-H
où R₂ représente un groupe alkylène et n est supérieur ou égal à 2, et chez lesquels l'atome d'hydrogène de l'un des deux groupes hydroxyle terminaux du polyalkylèneglycol est remplacé par un groupe organique représenté par R₁ ;
- dérivés de polyalkylèneglycols de formule générale :
R₁-O-(R₂-O)ₙ-R₃
où R₂ représente un groupe alkylène et n est supérieur à 5, et chez lesquels les atomes d'hydrogène des groupes hydroxyle terminaux du polyalkylèneglycol sont remplacés par des groupes organiques représentés par R₁ et R₃.

10. Emploi d'un ou plusieurs esters, choisis dans l'ensemble constitué par les suivants :
- esters de pentaérythritol de formule générale 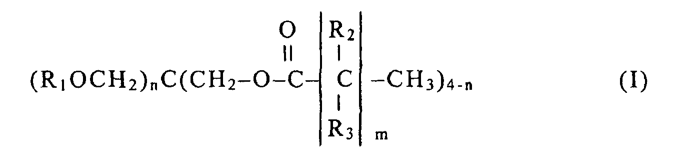 dans laquelle
R₁ représente un atome d'hydrogène ou un groupe alkyle ou aryle,
R₂ représente un atome d'hydrogène ou un groupe alkyle ou aryle,
R₃ représente un atome d'hydrogène ou un groupe alkyle ou aryle,
n vaut de 0 à 3,
et m vaut de 1 à 26 ;
- adipates de pentaérythritol et d'hydrocarbyle, de formule générale 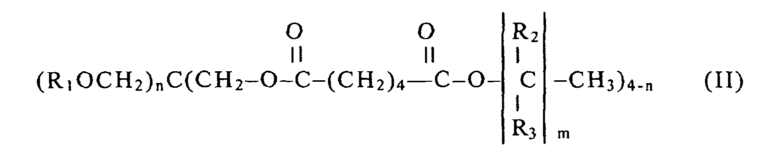 dans laquelle
R₁ représente un atome d'hydrogène ou un groupe alkyle ou aryle,
R₂ représente un atome d'hydrogène ou un groupe alkyle ou aryle,
R₃ représente un atome d'hydrogène ou un groupe alkyle ou aryle,
n vaut de 0 à 3,
et m vaut de 1 à 26 ;
en tant qu'adjuvant(s) réduisant l'auto-adhérence dans des feuilles extrudées à base de poly(alcool vinylique) partiellement acétalisé, destinées à la fabrication de verre composite de sécurité.

11. Emploi conforme à la revendication 10, **caractérisé en ce que** l'on emploie le ou les esters de pentaérythritol en une concentration telle que la force d'auto-adhérence (adhérence de contact entre feuilles), mesurée comme étant la force de pelage dans un essai de mesure de la résistance au pelage en T, réalisé selon le document EP 0 067 022 B2, est diminuée d'au moins 50 %.

12. Verre composite de sécurité, comportant au moins une plaque de verre et une feuille adjacente à cette plaque de verre, à base de poly(al-cool vinylique) partiellement acétalisé, conforme à l'une des revendications 1 à 9.

13. Transport et/ou stockage d'une feuille conforme à l'une des revendications 1 à 9, enroulée directement sur un rouleau, sans couche intermédiaire, **caractérisé en ce que** l'on chauffe le rouleau, au moins temporairement, à une température d'au moins 20 °C.
